# EUROPEAN PATENT SPECIFICATION

(11) **EP 1 590 929 B1**
(45) Date of publication and mention of the grant of the patent: **14.10.2015**
(21) Application number: 04702497.1
(22) Date of filing: 15.01.2004
(51) Int. Cl.: H04Q 3/00

(54) **METHODS AND SYSTEMS FOR GLOBAL TITLE TRANSLATION USING MESSAGE ORIGINATION INFORMATION**
VERFAHREN UND SYSTEME FÜR WELTWEITE TITELÜBERSETZUNG MITTELS NACHRICHTENERZEUGUNGSINFORMATION
PROCÉDÉ ET SYSTÈMES DE TRADUCTION DE TITRE GLOBAL AU MOYEN D'INFORMATIONS PROVENANT D'UN MESSAGE

(30) Priority: 16.01.2003 US 345632; 26.03.2003 US 397774
(43) Date of publication of application: 02.11.2005
(73) Proprietor: Tekelec Global, Inc., Morrisville, NC 27560 (US)
(72) Inventor: DELANEY, Robert, J., Raleigh, NC 27613 (US); EICHLER, Todd, Wake Forest, NC 27587 (US)
(74) Representative: Skone James, Robert Edmund
(86) International application number: PCT/US2004/000999
(87) International publication number: WO 2004/066545

(56) References cited:
- WO-A-99/67928
- US-B1- 6 175 574
- US-B1- 6 327 267
- US-B1- 6 535 746
- US-B1- 6 757 538
- US-B1- 6 842 506

## Description

### Technical Field

The present invention relates to methods and systems for global title translation. More particularly, the present invention relates to methods and systems for global title translation based on message origination information.

### Background Art

Within a signaling system 7 (SS7) network, the signaling connection control part (SCCP) protocol is used for accessing databases and other entities within the network. The SCCP protocol also provides an advanced addressing capability where a subsystem is represented as an array of digits known as a global title address. By utilizing global title address translation, the SS7 point code (PC) and subsystem number (SSN) of a final destination are not required to be known by the message originator. All the originator is required to know is the called party dialed digits and the address of a node that can perform the global title translation. Global title translation is commonly employed to locate databases that provide 800 number toll free and caller ID services within telecommunications networks. Depending on network topology, global title translation processing is typically performed at a signal transfer point (STP), a signaling gateway (SG), or a service control point (SCP) where one network makes an inter-connection to an adjacent network.

The addressing information used to facilitate message routing at the SCCP level commonly includes a destination point code, a subsystem number, and optionally a global title. If a destination PC and SSN are not specified in the SCCP portion of an SS7 message, global title translation may be used to resolve a global title address contained in the message to a destination point code and subsystem number or optionally another global title address. In an SCCP message, the called party address field contains a routing indicator to instruct network routing entities, such as STPs, to route on either point code and subsystem number or global title address. If the routing indicator identifies the message as requiring routing based on a global title address, the called party address is submitted for global title translation to produce a new destination address, which may be the local node or a different node in the network. In the case of an intermediate GTT, the receiving node may translate the global title address information in the message again.

Currently, there are two forms of GTT, intermediate and final GTT. Intermediate GTT involves performing GTT processing on a message at a first network node, such as an STP, and routing the translated message from the STP with the routing indicator set to route-on-gt for further GTT processing by a second network node. Final GTT involves performing GTT processing on an SCCP message at a first network node, such as an STP, and routing the translated message based upon point code-ssn to the appropriate destination or terminating network node, such as a database application. In both GT translation scenarios, there is a need to better discriminate both intermediate and final GTT based upon who is sending the message. Accordingly, there exists a long-felt need for improved methods and systems for global title translation in telecommunications networks.

U.S. Patent No. 6,327,267 discloses that a datagram is received from a packet-switched network at a first network node, and that the first network node may be a node of the packet-switched network or a node of a signalling network associated with a Public Switched Telephone Network (PSTN). The datagram includes a destination address of a destination node of the signaling network; the destination address has an address format associated with the packet-switched network, such as that defined by the Internet Protocol. A message is constructed for transmission from the first network node to a node of the signalling network; the message includes an address field containing the destination address and a translation type field containing an indicator that the destination address has an address format associated with the packet-switched network. The message is transmitted to a signalling network node, at which the translation type field of the message is examined and, if the indicator in the translation type field corresponds to the address format associated with the packet-switched network, the destination address is translated to a translated destination address corresponding to the destination node of the signaling network; the translated destination address has an address format defined by the signalling network protocol. The signaling network node may be the destination node. The systems and methods can be used to perform global title routing in the signaling network associated with the PSTN based on an Internet Protocol (IP) address associated with the packet-switched network.

### Disclosure of the Invention

The invention described herein allows network operators to selectively send both intermediate GTT messages and final GTT messages to different networks based on business arrangements, desired class of service, or other factors.
Commonly-assigned, co-pending United States patent application number 10/345,632 filed January 16, 2003 and entitled Methods and Systems for Associating a Plurality of Different Routes with the Same Destination and for Selectively Routing Signaling Messages to the Destination Over the Different Routes Using Message Origination Information Associated with Non-Adjacent Signaling Nodes, discloses systems and methods for enabling a network operator to select a route to the same destination point code (DPC) based upon the origin of the message being routed. The present invention allows a network operator to configure a network such that two SCCP messages containing the same global title address information may be routed to different DPCs based upon the origin of the message being routed. For example, messages from different OPCs with the same global title addresses may be global title translated to yield different DPCs.

According to one aspect, the present invention includes a method for global title translation in a telecommunications network. According to the method, a signaling message is received at a routing node, such as a signal transfer point. The routing node determines whether the signaling message requires global title translation. In response to determining that the signaling message requires global title translation, a lookup is performed in a global title translation database. The lookup may be performed based on a called party address and an originating point code extracted from the signaling message. Because the global title translation depends on the originating point code, messages from different originating point codes having the same global title address can be treated differently. This allows different network operators to establish agreements as to how their traffic will be global title translated.

Accordingly, it is an object of the present invention to provide improved methods and systems for global title translation in a telecommunications network.

It is another object of the invention to provide methods and systems for global title translation using message origination information.

It is yet another object of the invention to provide improved methods and systems for message-origination-based global title translation and, after the message-origination-based global title translation, for message routing based on message origination information.

Some of the objects of the invention having been stated hereinabove, and which are addressed in whole or in part by the present invention, other objects will become evident as the description proceeds when taken in connection with the accompanying drawings as best described hereinbelow.

### Brief Description of the Drawings

Preferred embodiments of the invention will now be described with reference to the accompanying drawings of which:
Figure 1 is a network diagram illustrating an SS7 network in which global title translation is utilized;
Figure 2 is a network diagram illustrating intermediate global title translation using message origination information according to an embodiment of the present invention;
Figure 3 is a network diagram illustrating final global title translation using message origination information according to an embodiment of the present invention;
Figure 4 is a data structure diagram illustrating exemplary data structures for the message-origination-based intermediate GTT example illustrated in Figure 2;
Figure 5 is a data structure diagram illustrating exemplary data structures for the message-origination-based final GTT example illustrated in Figure 3;
Figure 6 is a block diagram illustrating exemplary components of a signal transfer point for implementing message-origination-based global title translation according to an embodiment of the present invention; and
Figure 7 is a flow chart illustrating exemplary steps performed by the signal transfer point in Figure 6 in performing message-origination-based global title translation according to an embodiment of the present invention.

### Detailed Description of the Invention

### Exemplary Message Routing Scenarios

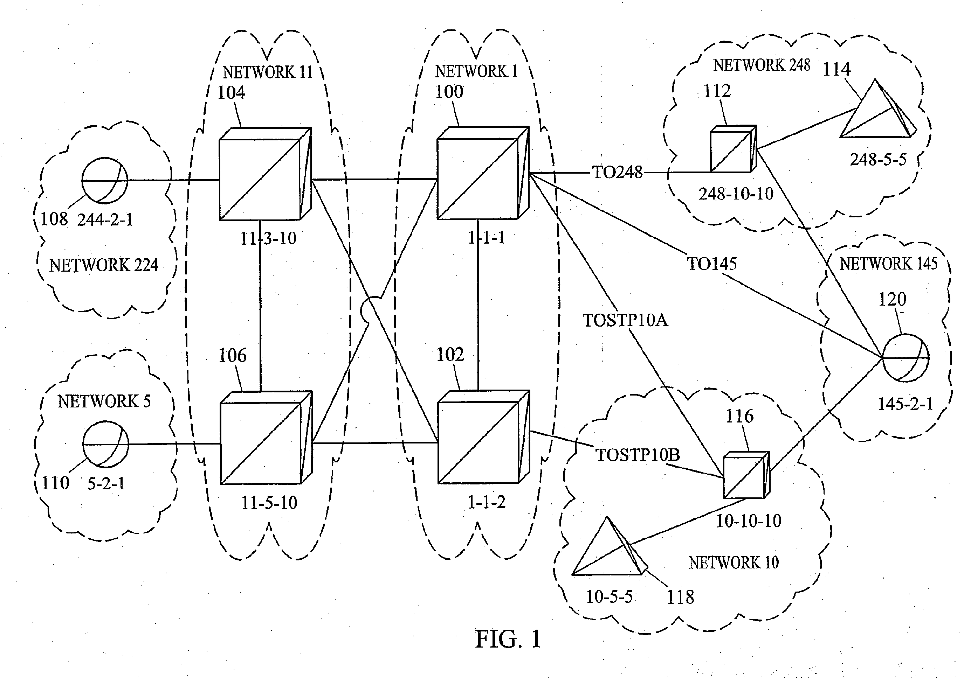

Figure 1 illustrates an SS7 network in which message-origination-based global title translation according to the present invention may be implemented. In Figure 1, the SS7 network is divided into many sub-networks based on the service providers that own or operate the various nodes in the network. In the illustrated example, each network is numbered in a manner corresponding to the network portion of the point codes of the nodes in each network. For example, network 1 includes STPs **100** and **102** having point codes 1-1-1 and 1-1-2. Similarly, network 11 includes STPs **104** and **106** having point codes 11-3-10 and 11-5-10. Network 244 includes an SSP **108** having a point code of 244-2-1. Similarly, network 5 includes an SSP **110** having a point code of 5-2-1. Network 248 includes an STP **112** having a point code of 248-10-10 and SCP **114** having a point code of 248-5-5. Network 10 includes an STP **116** having a point code of 10-10-10 and an SCP **118** having a point code of 10-5-5. Finally, network 145 includes an SSP **120** having a point code of 145-2-1.

In the network illustrated in Figure 1, a network operator owning STP pair **100** and **102** may desire to route GTT messages based upon the network that originates the message. For example, if a person calls from his phone via end office **108** and is placing a call that requires database queries, there may be business arrangements between the owners of network 1, network 11, network 248, and network 10 so that these queries are routed in a particular manner. For example, these business arrangements may require that messages requiring global title translation be translated and routed differently based on the origins of the messages.

Intermediate and final GTT lookups yield a destination point code that is placed in the MTP3 layer of a signaling message for routing. The DPC may correspond to an intermediate node or a final destination. Currently, the DPC can be selected based on several SCCP message parameters including global title address (GTA), translation type (TT), routing indicator (RI), nature of address indicator (NAI), and numbering plan (NP). The GTI parameter may be used to determine which GTT selector parameters are present in a received SCCP message. The selector parameters, such as TT, NP, and NAI, may then be used to select a GTT table for performing the global title translation. In conventional GTT, the lookup in the GTT table was performed solely based on the global title address. According to the present invention, the OPC or other message origination information may be used in combination with the global title address to perform the lookup in the GTT table. The present invention includes adding the OPC parameter from the routing label or calling party address (CgPA) field as an additional discriminator for determining the DPC during GTT processing.

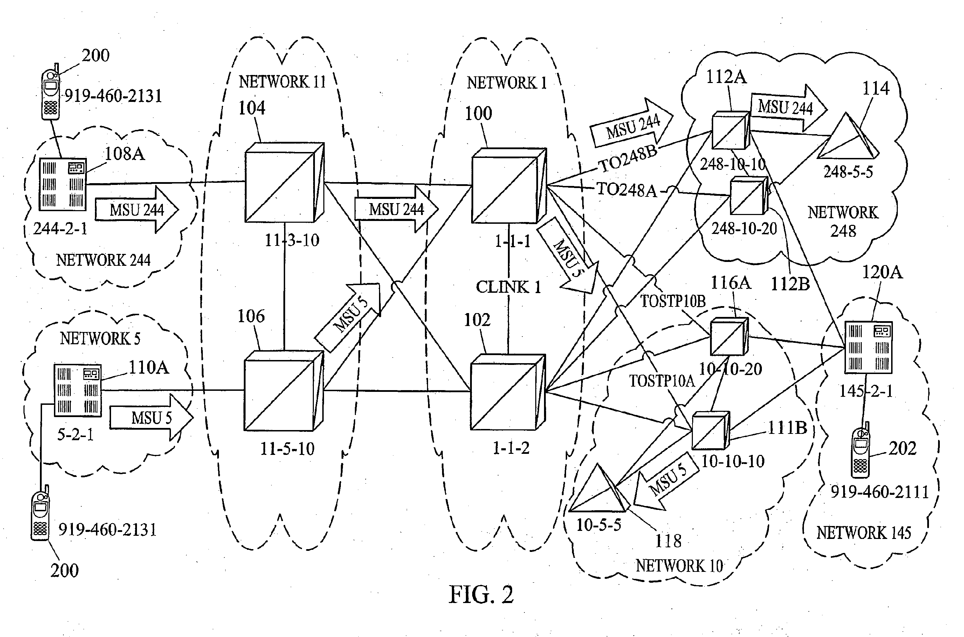

Figure 2 is a message flow diagram illustrating exemplary message flows associated with intermediate global title translation according to an embodiment of the present invention. Figure 2 is similar to the network illustrated in Figure 1. However, in Figure 2, STP **112** has been replaced by STPs **112A** and **112B.** Similarly, STP **116** has been replaced by STP pair **116A** and **116B.** End offices **108** and **110** have been replaced by mobile switching centers (MSCs) **108A** and **108B.** In addition, calling and called party mobile terminals **200** and **202** are illustrated.

In Figure 2, a caller having a directory number of 919-460-2131 originates a call from mobile terminal **200** to 919-460-2111. The call is assumed to require a database lookup (e.g., a calling name service (CNAM) lookup). The call originates in network 244 as MSU 244 via MSC **108.** MSU 244 is intermediate GTT'd at STP **104** and sent to STP **100.** The network operator who owns STP **100** contracts with the owners of networks 244 and 248 to deliver CNAM queries from network 244 to the SCP in network 248. Accordingly, the owner of STP **100** may configure STP **100** to perform intermediate global title translation on messages from network 244 that require CNAM lookups so that the resulting point code in the messages is that of STPs **112A** or **112B.** STPs **112A** and **112B** may then perform final GTT on the messages such that the resulting DPC in the messages is that of SCP **114.** Since the call originated in network 244, and the message is global title translated based on the origin, the query is sent to network 248's CNAM SCP **114.**

In this example, it is assumed that caller **200** travels to another location served by network 5 instead of network 244. Then, caller **200** again originates a call to 919-460-2111 that requires a database lookup, but now the message must be processed by MSC **110A** instead of MSC **108A.** The process is the same as described above, but since the call originated from network 5, STP **100** global title translates and routes the call to Network 10's STPs **116A** and **116B.** In this example, it is assumed that the owner of network 1 contracted with the owners of network 5 and network 10 to deliver CNAM queries originating from network 5 to network 10's STPs **116A** and **116B.** This business relationship may be implemented by configuring the global title translation tables in STP 100 to perform intermediate global title translation for calls from 5-2-1 that require a CNAM lookup such that the DPC resulting from the GTT is that of STP **116A** or **116B.** STP **116A** and **116B** may then final GTT the message such that the DPC is that of SCP **118.**

Using conventional GTT, the processing scenario illustrated in Figure 2 would not be possible because messages having the same global title address of 919-460-2111 would be global-title-translated to the same DPC. However, because the present invention uses message origination information as an additional GTT discriminator, messages with different origins but the same global title addresses can be global-title-translated to different destinations.

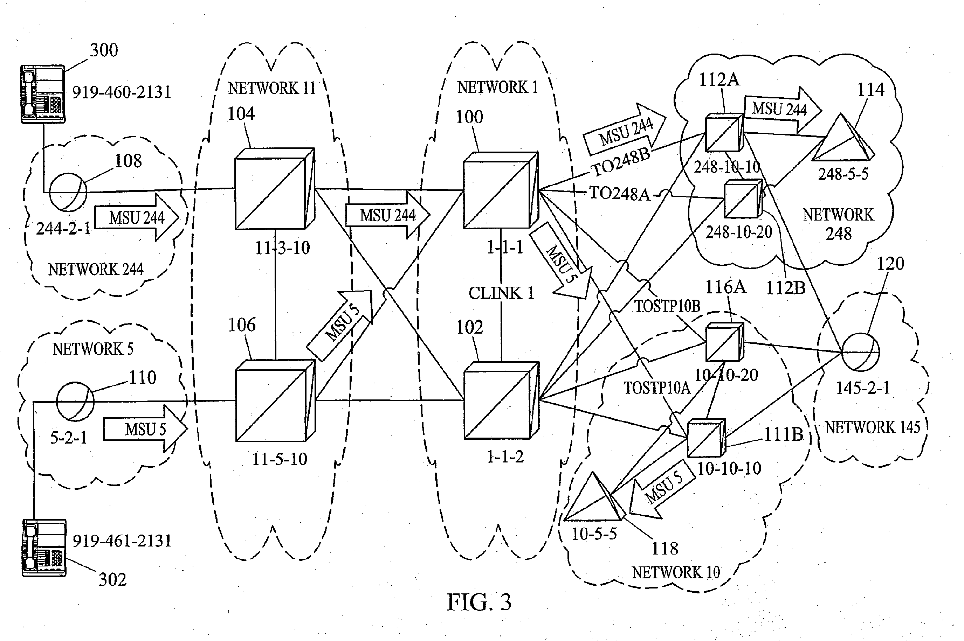

Figure 3 is a message flow diagram illustrating exemplary messaging associated with message-origination-based final GTT according to an embodiment of the present invention. In Figure 3, it is assumed that a wireline subscriber **300** places a call to 919-460-2111 from one end office using a particular directory number, and another subscriber **302** at a different end office places a call to the same number.

In Figure 3, wireline caller **300** originates a call from end office 108 to 919-460-2111 that requires a database lookup (e.g. a CNAM lookup). MSU 244 is intermediate GTT'd at STP 11-3-10 and sent to STP 1-1-1. The network operator who owns STP **100** contracts with the owners of networks 244 and 248 to deliver CNAM queries originating from network 244 to network 248. The owner of STP **100** may implement this relationship by configuring the global title translation tables in STP **100** to final-GTT messages from network 244 to SCP **114.** Since the call originated in network 244, the query is sent to network 248's CNAM SCP **114.**

Caller **302** at end office **110** originates a call to 919-460-2111 that requires a database lookup (e.g., a CNAM lookup). Since the call originated from network 5, STP **100** global title translates and routes the message to network 10's STPs **116A** and **116B.** In this example, it is assumed that the owners of network 1 contract with the owners of network 5 and network 10 to deliver LIDB queries originating from network 5 to network 10's STPs **116A** and **116B.**

As stated above, using conventional global-title-address-based GTT, the differential treatment illustrated in Figure 3 would not be possible because having the same global title address of 919-460-2111 would be global title translated to the same destination. The present invention allows messages having the same global title address to be sent to different destinations based on the origin of the messages.

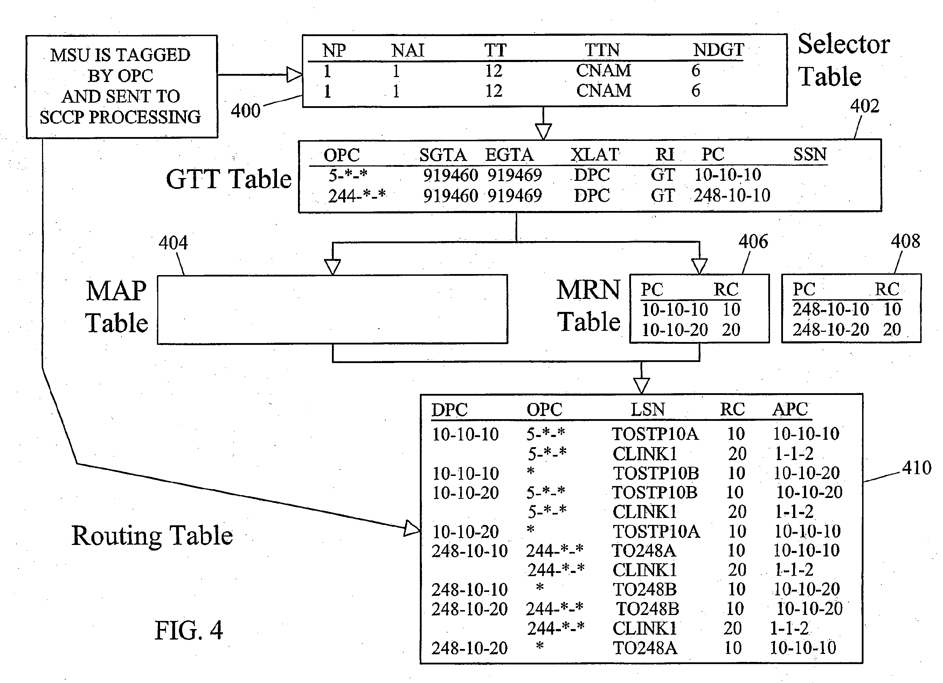

Figure 4 illustrates an example of GTT tables that may be used by STP **100** in Figure 2 in performing OPC-based intermediate GTT according to the present invention. In Figure 4, the GTT tables include a selector table **400** for selecting the appropriate service for a received message, a global title translation table **402** for performing intermediate OPC-based global title translation according to an embodiment of the present invention, a MAP table **404,** and routing tables **406, 408,** and **410** for routing messages after they are global title translated. In Figure 4, selector table **400** includes parameters such as the numbering plan, nature of address, and translation type used to select an appropriate service type for a received message. In the illustrated example, the service types are all CNAM. However, other service types may be provisioned in selector table **400** without departing from the scope of the invention.

Global title translation table **402** includes an OPC field, start and end global title address fields, a translation field, a routing indicator field, a point code field, and a subsystem number field. It should be noted that in table **402,** entries having the same range of global title addresses but different OPCs will be global title translated to yield different destination point codes. MAP table **404** is not used for intermediate GTT. Hence, a description thereof will not be presented herein. MRN tables **406** and **408** include point code and route cost fields used to make routing decisions based on route calls. Routing table **410** includes a DPC field, an OPC field, a linkset name field, a route cost field, and an adjacent point code field. The DPC field stores a DPC value used to select an outbound linkset for a message. The OPC field stores OPC values that may be used to select an outbound linkset, as described in the above-referenced parent application. The linkset name field stores identifiers for linksets to be selected for outbound message routing. The route cost field contains a cost associated with each route. Finally, the adjacent point code field stores the point code of a node at the far end of a signaling link.

As shown in Figure 4, the OPC qualifier in the GTT table allows the network operator to select a different intermediate DPC for the same service type-GTA combination. In addition, the linkset selected in the routing table may also depend on the OPC. Thus, there is a two-fold effect for OPC routing of GTT messages. First, the DPC can be selected by OPC, and then, the route taken to the DPC can be dependent on the OPC.

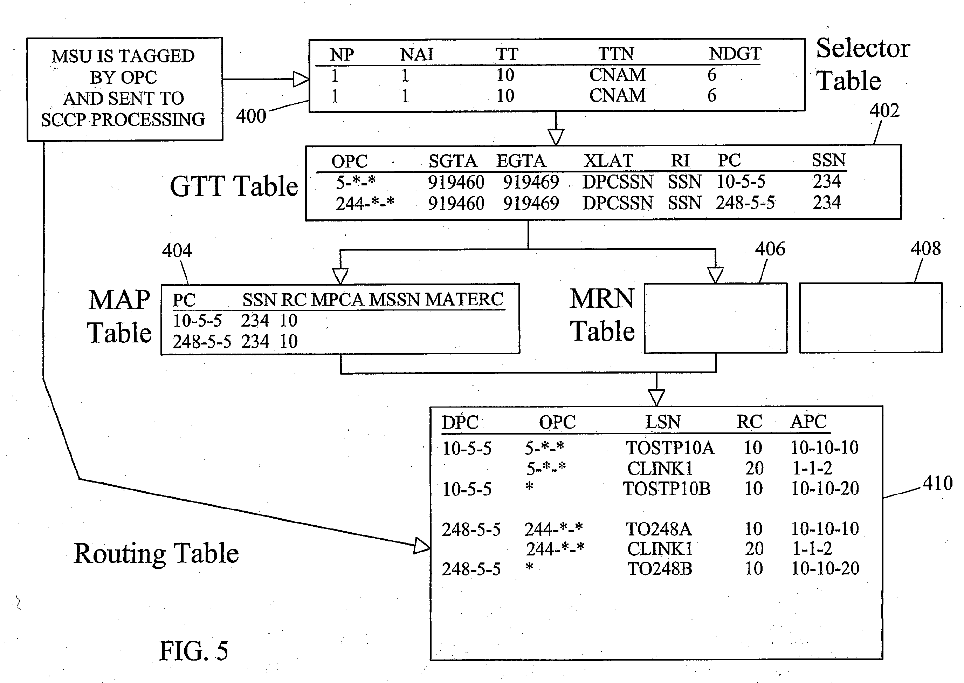

Figure 5 illustrates exemplary GTT tables that may be used by STP **100** illustrated in Figure 3 in performing final GTT according to the present invention. The difference between intermediate and final global title translation can be shown by comparing table **402** illustrated in Figure 4 with table **402** illustrated in Figure 5. As illustrated in Figure 4, table **402** includes point codes 10-10-10 corresponding to STP **116B** and 248-10-10 corresponding to STP **112A.** In addition, GTT table **402** illustrated in Figure 4 contains a translation identifier of GTT. Thus, STPs **112A** and **116A** upon receiving messages that were global title translated by STP **100** using table **402** illustrated in Figure 4 would be required to perform a final global title translation. In contrast, in GTT table **402** illustrated in Figure 5, the point codes to be inserted in global title translated messages are 10-5-5 and 248-5-5, which correspond to SCPs **118** and **114** illustrated in Figure 3. In addition, the routing indicator is DPC/SSN, indicating that any subsequent STPs in a network are to simply MTP route the messages rather than performing global title translation.

As shown in Figure 5, the OPC qualifier in the GTT table allows the network operator to select a different final DPC-SSN for the same service type-GTA combination. In addition, the linkset selected in the routing table may also depend on the OPC. Thus, there is a two-fold effect for OPC routing of GTT messages. First, the DPC is selected by OPC, and then, the route taken to the DPC is dependent on the OPC.

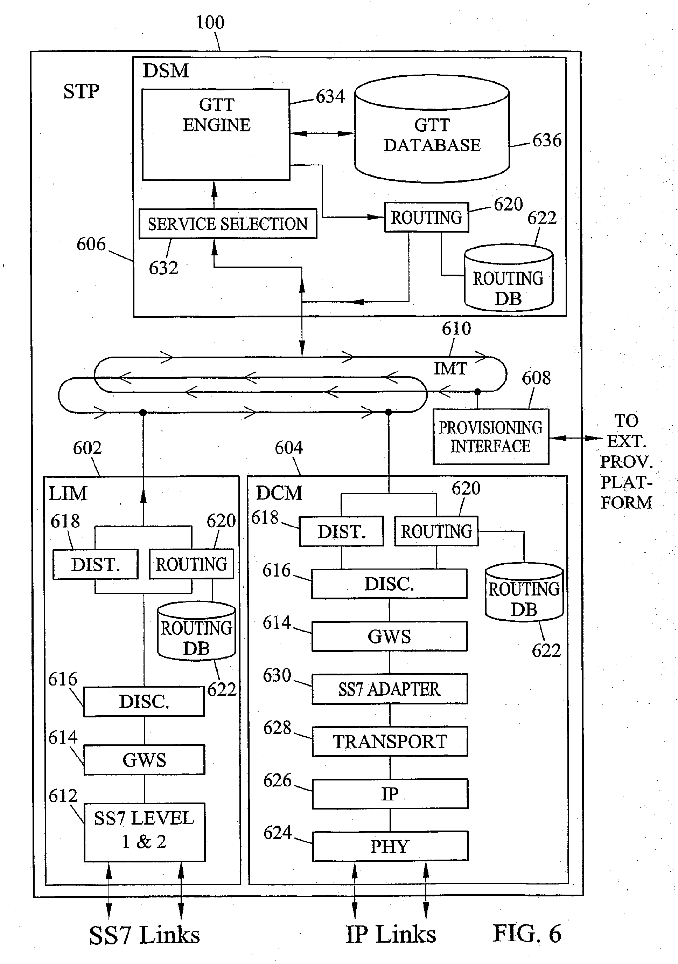

Figure 6 illustrates a signal transfer point for performing message origination based global title translation according to an embodiment of the present invention. Referring to Figure 6, signal transfer point **100** includes a plurality of internal processing modules for routing and processing SS7 messages. In the illustrated example, signal transfer point **100** includes a link interface module **602** for sending and receiving SS7 messages via SS7 signaling links, a data communications module **604** for sending and receiving SS7 message via IP signaling links, a database services module **606** for performing database related services, and a provisioning interface **608** for allowing an external system to provision databases within STP 100. In the illustrated example, modules **602, 604, 606,** and **608** are connected via a counter-rotating, dual-ring bus **610.**

SS7 link interface module **602** includes an SS7 level one and two module **612** for performing SS7 level one and two functions, such as error detection, error correction, and sequencing of SS7 messages. Gateway screening module **614** determines whether to allow messages into a network. Discrimination module **616** analyzes destination point codes in a message to determine whether further processing is required for the messages or whether the messages are to be through-switched. Distribution module **618** distributes messages identified by discrimination module **616** as requiring further processing to other internal processing modules for the processing to be performed. Routing module **620** routes messages identified by discrimination module **616** as being destined for other signaling nodes. Routing module **620** may access a routing database **622** to route the messages.

Data communications module **604** includes a physical layer **624** for performing physical layerfunctions for IP signaling links. Internet protocol layer **626** performs IP layer functions, such as IP forwarding. Transport layer **628** performs transport layer functions, such as TCP or SCTP functions. SS7 adapter layer **630** performs functions for adapting SS7 traffic to be sent and/or received over an IP network. Gateway screening module **614,** distribution module **618,** routing module **620,** and routing database **622** perform the same functions as those described above with regard to LIM **602.** Hence a description of these functions will not be repeated herein.

Database services module **606** includes a service selection module **632** for selecting a service for messages identified as requiring further internal processing. For purposes of explanation of the present invention, the selected service is assumed to be global title translation. Service selection may be performed based on one or more SCCP parameters in a signaling message, such as translation type, nature of address indicator, routing indicator, global title indicator, number plan, etc. Global title translation engine **634** performs global title translation based on the called party address and the originating point code in a received signaling message. Global title translation database **636** may include the data structures described above for performing intermediate and final global title translation using the originating point code. Routing function **620** and routing database **622** perform similar functions to those described with regard to LIM **602.** Hence, a description thereof will not be repeated herein.

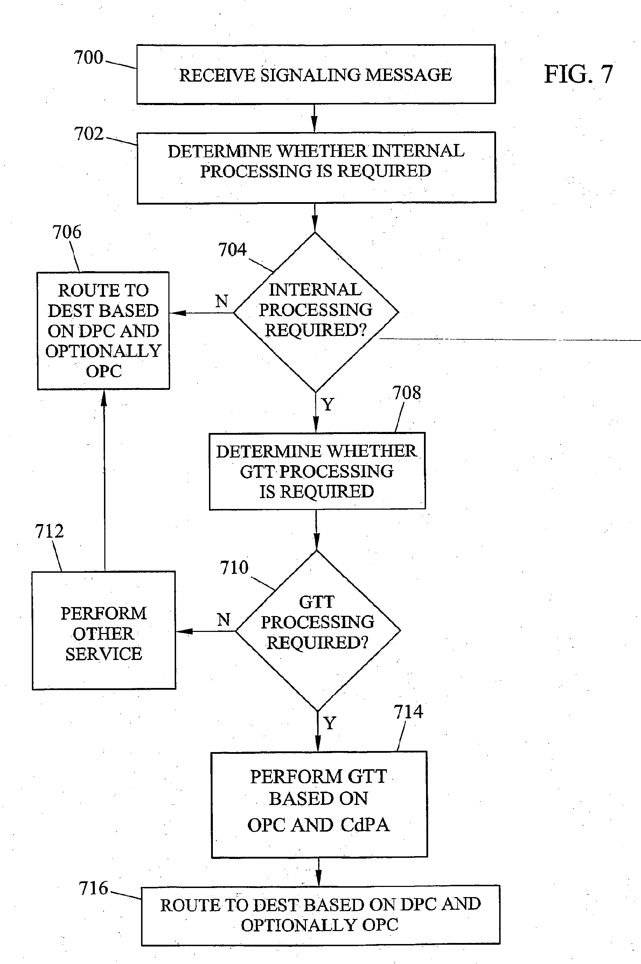

Figure 7 is a flow chart illustrating exemplary steps performed by STP **100** in performing message-origination-based global title translation according to an embodiment of the present invention. Referring to Figure 7, in step **700,** STP **100** receives a signaling message. In step **702,** discrimination module **616** determines whether further internal processing is required. In step **704,** if further internal processing is not required, control proceeds to step **706** where the message is routed to its intended destination based on the destination point code and optionally the originating point code-destination point code combination. In step **704,** if discrimination module **616** determines that further internal processing is required, the message is forwarded to DSM **606** and service selection module **632** determines whether GTT processing is required. In step **710,** if GTT processing is not required, control proceeds to step **712** where another selected service is performed for the message and the message is routed to its intended destination. In step **710,** if GTT processing is determined to be required, control proceeds to step **714** where global title translation engine **634** performs global title translation based on the OPC and the called party address in the message. The destination point code from the global title translation is then inserted in the message, and control proceeds to step **716** where the message is routed to its intended destination based on the DPC and optionally the OPC-DPC combination.

Thus, as described above, the present invention includes methods and systems for message origination based global title translation. Such flexible global title translation allows network operators to contract with other network operators for selective global title translation and routing of signaling messages based on originating point codes. For example, global title translation can be used to ensure that messages from network A are sent to a particular database providing a higher quality of service than messages from network B., even though the messages from networks A and B have the same global title address. In addition, such source-based GTT according to the present invention can be used in combination with the OPC-based linkset selection described in the Parent Application to select among multiple linksets connected to the same destination. By providing such flexible GTT and routing, the present invention allows service providers to specify and contract with other service providers on exactly how traffic from a particular source will be treated.

## Claims

1. A method for global title translation in a telecommunications network comprising:
(a) receiving a signaling message;
(b) determining whether the signaling message requires global title translation; and
(c) in response to determining that the signaling message requires global title translation, performing a lookup in a global title translation database, wherein performing the lookup in the global title translation database includes performing the lookup using a called party address and an originating point code extracted from the signaling message.

2. The method of claim 1 wherein receiving a signaling message includes receiving an SS7 signaling message.

3. The method of claim 1 wherein receiving a signaling message includes receiving a signaling message requiring intermediate global title translation.

4. The method of claim 1 wherein receiving a signaling message includes receiving a signaling message requiring final global title translation.

5. The method of claim 1 wherein determining whether the signaling message requires global title translation includes analyzing a signaling connection control part of the signaling message.

6. The method of claim 1 wherein performing a lookup in the global title translation database based on the called party address and the originating point code includes selecting among multiple entries in the global title translation database having the same called party address using the originating point code.

7. The method of claim 1 comprising extracting a destination point code from the global title translation database based on the called party address and the originating point code and inserting the destination point code in the signaling message.

8. The method of claim 7 comprising routing the signaling message to a destination based on the destination point code.

9. The method of claim 1 comprising selecting among multiple entries in the global title translation database having the same global title address using the originating point code, inserting a destination point code from the selected entry in the signaling message, and selecting an outbound signaling linkset to the destination point code based on the destination point code and the originating point code.

10. A system for global title translation in a telecommunications network, the system comprising:
(a) a communications link module for sending signaling messages to and receiving signaling messages from a network;
(b) a discrimination application operatively associated with the communications link module for identifying messages requiring further processing; and
(c) a global title translation engine operatively associated with the discrimination module for receiving the messages requiring further internal processing, for determining whether global title translation is required for the messages, and for performing a lookup in a global title translation database using a called party address and an originating point code in each of the signaling messages for which GTT is required.

11. The system of claim 10 wherein the communications link module comprises an SS7 link interface module.

12. The system of claim 10 wherein the discrimination application is adapted to examine a destination point code in the signaling messages to determine whether further processing is required.

13. The system of claim 10 wherein the global title translation engine is adapted to select among multiple entries in the global title translation database having the same global title address based on the originating point code.

14. The system of claim 13 wherein the global title translation engine is adapted to insert the destination point code from the selected entry in each signaling message for which GTT is required.

15. The system of claim 13 comprising a routing engine for routing the message to its intended destination based on the destination point code.

16. The system of claim 15 wherein the routing engine is adapted to select an outbound linkset to the destination point code for each signaling message for which GTT is required based on the destination point code and the originating point code in each signaling message.

## Patentansprüche

1. Verfahren für weltweite Titelübersetzung in einem Telekommunikationsnetzwerk, umfassend:
(a) Empfangen einer Signalisierungsnachricht;
(b) Ermitteln, ob die Signalisierungsnachricht weltweite Titelübersetzung erfordert; und
(c) als Reaktion auf das Ermitteln, dass die Signalisierungsnachricht weltweite Übersetzung erfordert, Ausführen eines Suchlaufs in einer Datenbank für weltweite Titelübersetzung, wobei die Ausführung des Suchlaufs in der Datenbank für weltweite Titelübersetzung die Ausführung des Suchlaufs unter Verwendung einer angerufenen Teilnehmeradresse und einen Ursprungscode aus der Signalisierungsnachricht einschließt.

2. Verfahren nach Anspruch 1, wobei das Empfangen einer Signalisierungsnachricht das Empfangen einer SS7-Signalisierungsnachricht einschließt.

3. Verfahren nach Anspruch 1, wobei das Empfangen einer Signalisierungsnachricht das Empfangen einer Signalisierungsnachricht einschließt, die zwischenzeitliche weltweite Titelübersetzung erfordert.

4. Verfahren nach Anspruch 1, wobei das Empfangen einer Signalisierungsnachricht das Empfangen einer Signalisierungsnachricht einschließt, die endgültige weltweite Titelübersetzung erfordert.

5. Verfahren nach Anspruch 1, wobei das Ermitteln, ob die Signalisierungsnachricht weltweite Titelübersetzung erfordert, das Analysieren eines Signalisierungs-Verbindungssteuerteils der Signalisierungsnachricht einschließt.

6. Verfahren nach Anspruch 1, wobei die Ausführung eines Suchlaufs in der Datenbank für weltweite Titelübersetzung, auf der angerufenen Teilnehmeradresse und dem Ursprungscode beruhend, das Selektieren unter mehrfachen Einträgen in der Datenbank für weltweite Titelübersetzung unter Verwendung des Ursprungscodes einschließt, welche dieselbe angerufene Teilnehmeradresse haben.

7. Verfahren nach Anspruch 1, welches Herausziehen eines Zielpunktcodes aus der Datenbank für weltweite Titelübersetzung, auf der angerufenen Teilnehmeradresse und dem Ursprungscode beruhend, und das Einfügen des Zielcodes in die Signalisierungsnachricht umfasst.

8. Verfahren nach Anspruch 7, welches das Routing der Signalisierungsnachricht zu einem auf dem Zielcode beruhenden Ziel umfasst.

9. Verfahren nach Anspruch 1, welches das Selektieren unter mehrfachen Einträgen in der Datenbank für weltweite Titelübersetzung mit derselben weltweiten Titeladresse unter Verwendung des Ursprungscodes, Einfügen eines Zielcodes aus dem selektierten Eintrag in der Signalisierungsnachricht und das Selektieren eines abgehenden Signalisierungs-Link-Sets zum Zielcode, auf dem Zielcode und dem Ursprungscode beruhend, umfasst.

10. System für weltweite Titelübersetzung in einem Telekommunikationsnetzwerk, wobei das System umfasst:
(a) ein Kommunikationsverbindungsmodul zum Senden von Signalisierungsnachrichten an ein und Empfangen von Signalisierungsnachrichten von einem Netzwerk;
(b) eine Diskriminationsanwendung, die wirkend mit dem Kommunikationsverbindungsmodul zum Identifizieren von Nachrichten assoziiert ist, die weitere Verarbeitung erfordern; und
(c) eine Maschine für weltweite Titelübersetzung, die wirkend mit dem Diskriminationsmodul zum Empfangen der Nachrichten assoziiert ist, die weitere interne Verarbeitung erfordern, zum Ermitteln, ob weltweite Titelübersetzung für die Nachrichten erforderlich ist, und zum Ausführen eines Suchlaufs in der Datenbank für weltweite Titelübersetzung unter Verwendung einer angerufenen Teilnehmeradresse und eines Ursprungscodes in jeder der Signalisierungsnachrichten für die weltweite Titelübersetzung (GTT) erforderlich ist.

11. System nach Anspruch 10, wobei das Kommunikationsverbindungsmodul ein SS7-Link-Schnittstellenmodul umfasst.

12. System nach Anspruch 10, wobei die Diskriminationsanwendung angepasst ist, einen Zielcode in den Signalisierungsnachrichten zu untersuchen, um zu ermitteln, ob weitere Verarbeitung erforderlich ist.

13. System nach Anspruch 10, wobei die Maschine für weltweite Titelübersetzung angepasst ist, in der Datenbank für weltweite Titelübersetzung unter mehrfachen Einträgen zu selektieren, welche auf dem Ursprungscode beruhend die gleiche weltweite Titeladresse haben.

14. System nach Anspruch 13, wobei die Maschine für weltweite Titelübersetzung angepasst ist, den Zielcode aus dem selektierten Eintrag in jede Signalisierungsnachricht einzufügen für die weltweite Titelübersetzung (GTT) erforderlich ist.

15. System nach Anspruch 13, das eine Routing-Maschine zum Routen der Nachricht zu ihrem beabsichtigten Ziel, auf dem Zielcode beruhend, umfasst.

16. System nach Anspruch 15, wobei die Routing-Maschine angepasst ist, einen abgehenden Link-Set zum Zielcode für jede Signalisierungsnachricht, für die weltweite Titelübersetzung (GTT) erforderlich ist, auf dem Zielcode und dem Ursprungscode in jeder Signalisierungsnachricht beruhend zu selektieren.

## Revendications

1. Procédé de traduction de titre gobal dans un réseau de télécommunications qui consiste entre autres:
(a) à recevoir un message de signalisation;
(b) à déterminer si le message de signalisation exige une traduction de titre gobal; et
(c) en réponse à la détermination selon laquelle le message de signalisation exige une traduction de titre gobal, à consulter une base de données de traduction de titre gobal, **caractérisé en ce que** cette consultation de la base de données de traduction de titre gobal consiste entre autres à procéder à la consultation en se servant de l'adresse de la partie appelée et d'un code ponctuel d'origine extrait du message de signalisation.

2. Procédé selon la revendication 1, **caractérisé en ce que** la réception d'un message de signalisation couvre la réception d'un message de signalisation SS7.

3. Procédé selon la revendication 1, **caractérisé en ce que** la réception d'un message de signalisation couvre la réception d'un message de signalisation qui exige la traduction intermédiaire de titre gobal.

4. Procédé selon la revendication 1, **caractérisé en ce que** la réception d'un message de signalisation couvre la réception d'un message de signalisation qui exige la traduction finale de titre gobal.

5. Procédé selon la revendication 1, **caractérisé en ce que** la détermination selon laquelle le message de signalisation exige la traduction de titre gobal consiste entre autres à analyser une partie du message de signalisation qui contrôle la connexion de signalisation.

6. Procédé selon la revendication 1, **caractérisé en ce qu'**une consultation de la base de données de traduction de titre gobal, basée sur l'adresse de la partie appelée et sur le code ponctuel d'origine, consiste entre autres å sélectionner parmi les entrées multiples dans la base de données de traduction de titre gobal celle qui a la même adresse que la partie appelée en utilisant le code ponctuel d'origine.

7. Procédé selon la revendication 1, qui consiste entre autres à extraire un code ponctuel de destination à partir de la base de données de traduction de titre gobal, ceci sur la base de l'adresse de la partie appelée et du code ponctuel d'origine, et à insérer le code ponctuel de destination dans le message de signalisation.

8. Procédé selon la revendication 7, qui consiste entre autres à acheminer le message de signalisation vers une destination qui sera fonction du code ponctuel de destination.

9. Procédé selon la revendication 1, qui consiste entre autres à sélectionner, parmi les entrées multiples dans la base de données de traduction de titre gobal celle qui a la même adresse en utilisant le code ponctuel d'origine, à insérer dans le message de signalisation un code ponctuel de destination provenant de l'entrée sélectionnée dans le message de signalisation, et à sélectionner un ensemble de liaisons de signalisation de départ vers le code ponctuel de destination, ceci sur la base du code ponctuel de destination et du code ponctuel d'origine.

10. Système de traduction de titre gobal dans un réseau de télécommunications, le système comportant:
(a) un module de liaison de communication qui sert à transmettre des messages de signalisation vers un réseau et à recevoir des messages de signalisation provenant du réseau;
(b) une application de discrimination associée opérationnellement au module de liaison de communication et servant à identifier les messages qui exigent un traitement ultérieur; et
(c) un moteur de traduction de titre gobal associé manière opérationnellement au module de discrimination et servant à recevoir les messages qui exigent un traitement interne ultérieur, afin de déterminer si la traduction de titre gobal est requise pour les messages, et de consulter une base de données de traduction de titre gobal en utilisant une adresse de la partie appelée et un code ponctuel d'origine dans chaque message de signalisation qui exige la traduction de titre gobal.

11. Système selon la revendication 10, **caractérisé en ce que** le module de liaison de communications comprend un module d'interface avec la liaison SS7.

12. Système selon la revendication 10, **caractérisé en ce que** l'application de discrimination est adaptée de manière à examiner un code ponctuel de destination dans les messages de signalisation afin de déterminer s'il va falloir procéder à un traitement ultérieur.

13. Système selon la revendication 10, **caractérisé en ce que** le moteur de traduction de titre gobal est adapté de manière à sélectionner parmi les entrées multiples dans la base de données de traduction de titre gobal celle qui a la même adresse de titre gobal, ceci sur la base du code ponctuel d'origine.

14. Système selon la revendication 13, **caractérisé en ce que** le moteur de traduction de titre gobal est adapté de manière à insérer le code ponctuel de destination provenant de l'entrée sélectionnée dans chaque message de signalisation qui exige une traduction de titre gobal.

15. Système selon la revendication 13, comportant un moteur d'acheminement qui sert à acheminer le message vers sa destination prévue, ceci sur la base du code ponctuel de destination.

16. Système selon la revendication 15, **caractérisé en ce que** le moteur d'acheminement est adapté de manière à sélectionner un ensemble de liaisons de départ vers le code ponctuel de destination pour chaque message de signalisation pour lequel la traduction de titre gobal est requise, ceci sur la base du code ponctuel de destination et du code ponctuel d'origine dans chaque message de signalisation.
